# EUROPEAN PATENT SPECIFICATION

(11) **EP 1 577 129 B1**
(45) Date of publication and mention of the grant of the patent: **09.05.2007**
(21) Application number: 04006672.2
(22) Date of filing: 19.03.2004
(51) Int. Cl.: B60H 1/00

(54) **Control unit for a vehicle air conditioning system**
Bedieneinrichtung für eine Fahrzeugklimaanlage
Dispositif de commande pour un climatiseur d'un véhicule automobile

(43) Date of publication of application: 21.09.2005
(73) Proprietor: Ford Global Technologies, LLC, Dearborn, MI 48126 (US)
(72) Inventor: Alexandersson, Peter, SE-434 97 Kungsbacka (SE); Heyden, Pär, SE-442 98 Kode (SE)
(74) Representative: Engstrand, Maria Linnéa

(56) References cited:
- EP-A- 1 398 186
- DE-A- 10 042 028
- DE-A- 19 941 616
- FR-A- 2 731 090
- US-A- 3 286 044

## Description

### Field of the invention

The present invention relates to a vehicle control unit, especially for controlling the climate inside a vehicle, comprising a control member being adjustable between a plurality of first coordinates in relation to a first geometrical axis, and being adjustable between a plurality of second coordinates in relation to a second geometrical axis.

### Background of the invention

Control systems for regulating the climate inside a vehicle usually comprise a number of manually controlled members, such as knobs, buttons, levers etc. Sometimes, such systems may be difficult to understand and control, and require a certain adaptation period for a user to become properly acquainted with the system.

US 6 115 657 (Petit) describes an example of a system in which a control knob is rotable between different positions, each position allowing adjustment of one specific characteristic of the control system, such as regulation of temperature, of air distribution or of mass flow of air. When the knob is in the temperature regulation position, the knob may be tilted in one direction so as to increase the temperature setting incrementally with each tilt, and in another direction so as to decrease the temperature setting. For setting several parameters, such as the temperature and the mass flow of air, the knob must thus first be set in a first position, tilted to the required temperature value, then rotated to a second position and tilted to the required mass flow of air value. The values set are shown on a digital display that is situated beside the control knob.

FR 2 757 284 (Olivier) describes a system in which a control lever may be rotated about a first axis for selection of a plurality of positions. A central position designated "0" is associated with no heating or cooling being required. If rotated clockwise from the "0" position, the lever reaches a position designed "1", in which the heating of the vehicle is activated, and the air flow into the vehicle is at level 1. If rotated further clockwise, the lever reaches a position designated "2", in which the air flow into the vehicle is increased to level 2. If rotated further clockwise, the lever reaches a position also designated "2" in which the air flow is kept at level 2, but the direction of the incoming air is changed, from entering at the feet of the driver/passenger, to a direction suitable for demisting of the windshield. If the lever is moved anti-clockwise from the "0" position, the lever reaches similar positions designated "1", "2" and "2", indicating the level of incoming air flow, but in this direction the incoming air has been cooled instead of heated. For increasing the incoming air flow additionally, the lever may be rotated about a second axis. If rotated about the second axis, the lever will reach a position "3" and subsequently a position "4", indicating selection of increased air flow to levels 3 and 4.

EP 1398186 (Bouisset et al.) describes a ventilation system control comprising a box fixed to the dashboard of a vehicle. This has three controls: a base plate which is mounted to pivot within the box; a lever mounted on the base plate, able to turn about a second axis which is parallel to the front surface of the dashboard; and further control mounted to pivot and lie concentrically with respect to the first control. The control for the ventilation system in a vehicle cabin comprises a box which is to be fixed to the dashboard of the vehicle, and a base plate which is mounted to pivot within the box about an axis perpendicular to the dashboard surface. The rotation of this base plate controls a first function. A lever is mounted on the base plate, and is able to turn about a second axis which is parallel to the front surface of the dashboard. This lever action controls a second function. A further control is mounted to pivot about the first axis and lie concentrically with respect to the first control. This further control provides a third function. The three controls may be used to regulate temperature, the speed of the fan, and the distribution of the air flow within the cabin.

The systems mentioned above all function differently, and require the user to make an effort in order to learn the function of the system, and still it may be difficult to understand and to adjust properly.

Further, many of the systems occupy a relatively large portion of the available space on a dashboard of a vehicle. In modem vehicles where room needs to be made for displays of various new systems such as computer guided routing systems, there is a particular need for making additional space available.

Accordingly, it is desirable to have a climate control system which is more intuitive and easy to understand than the present systems, and which preferably facilitates easy adjustment of the system during driving, without excessive attention needed from the driver. In addition, it is desired to have a system which enables constructions taking up less space of the dashboard than present systems.

### Summary of the invention

It is an object of the present invention to provide a control unit which presents one or several of the above-mentioned desired qualities.

This object is achieved by a vehicle control unit according to the introduction, wherein each first coordinate (α) corresponds to a unique value of a first control parameter P1 on a scale from a minimum to a maximum value and each second coordinate (β) corresponds to a unique value of a second control parameter P2 on a scale from a minimum to a maximum value, and the control member is independently adjustable in relation to each of the first and second axes, such that changing from any combination of the two parameters (T, F) to any other combination of the two parameters T+ΔT, F+ΔF) is achievable by adjustment of the control member from one position (α, β) to another position (α+Δα, β+Δβ) by one single, unidirectional movement of the control member in relation to the two axes.

A control unit having a control member being independently adjustable in relation to two different axes, where one of the axes is associated with a first parameter scale and the other axis is associated with the second parameter scale, allows for adjustment of both the first and the second parameter with one single move of the control member. In other words: any combination of the two parameters may be defined by a combination of the first and second coordinate, which corresponds to one unique position of the control member in relation to the two axes. Changing from any combination of the first parameter and the second parameter values to any other combination of first and second parameter values, is made by adjusting the control member from any position to any other position in relation to the two axis, which adjustment may be made in one single move, preferably unidirectional. Thus, selection between any combinations of values may be made by adjustment of the control member along a straight line. This is a simple way of performing the adjustment which does not demand much attention from the user.

Further, that each axis is associated with a unique value of one parameter, such as temperature or air-conditioning flow (but not a combination thereof), makes the control unit easy to understand and to learn how to handle. The correspondence between an adjustment of the control member (Δα, Δβ) and the resulting effect (ΔT, ΔF) is particularly intuitive since an adjustment along one of the axis (e g Δα) always results in the same effect on the associated parameter (e.g. AT), regardless of the present setting or simultaneous adjustment of the other parameter, that is, the control members relation to the other axis.

By the terms first and second control parameters is to be understood that they relate to two different adjustable parameters, controlling different properties of a system to which the control unit is connected.

According to the invention, said first and second pluralities of coordinates follow continually along each axis, enabling stepless adjustment of the first and second parameter. This type of arrangement allows great liberty in selecting the desired conditions, as well as an easily controllable device.

Advantageously, the control member is rotationally adjustable about the first and second axis. This construction provides for a device that is particularly intuitive and easy to use. Also, such a device may advantageously be designed so as to take relatively little space at e.g. a vehicle dashboard section. Since no displacement of the control member is necessary for adjustment, but only directional manipulation to achieve rotations of the control members in space, the control member will stay at a fixed position on a support, such as a dashboard or centre stack. Accordingly, the space required is basically only dependent on design aspects such as a convenient size and shape of the member in order for it to be easily gripped.

Preferably, the first axis is orthogonal with the second axis.

The unit may be arranged at a suitable support in a vehicle, such as a dashboard, and advantageously in such a position that one of said first and second axes is directed so as to extend from a plane corresponding to the support. Preferably, the axis may extend so as to generally coincide with a normal to said plane, thus enabling a practical and easy to use construction of the device.

The control unit is particularly suitable for climate control inside a vehicle, in which case the first control parameter may be the temperature inside the vehicle and the first axis corresponds to a temperature scale, and said second control parameter may be the air-conditioning flow inside the vehicle and the second axis corresponds to an air-conditioning flow scale.

Preferably, the first axis being associated with the temperature scale then extends from a support plane, and the second axis being associated with the air-conditioning flow essentially coincides with the support plane. This configuration enables a set up, where, as seen from a driver's position, the minimum temperature position is situated to the right on the support and the maximum temperature position is situated to the left, and the minimum air-conditioning flow position is situated in a downward direction and the maximum air-conditioning flow position is situated in an upward direction. This particular arrangement has the advantage that it mimics the function of a water tap, which the user will recognise and immediately be able to use.

Advantageously, the control member may be adjustable to a position beyond at least one of said scales. This position may correspond to an automatic state of one of the parameters. For example, the control member may be adjustable to a position beyond the air-conditioning scale corresponding to an automatic air-conditioning flow position, in which the temperature may still be adjusted by rotation around the first axis.

Advantageously, a display device for presenting values of the first and/or second parameter may be arranged on said control member. This feature enables further space to be saved e.g. at the dashboard section of a vehicle. The display device may further be arranged so as to be fixed in relation to the support, so that, although the control member may be rotated, the display will always appear in a direction such that the information presented on it is easily read by the user.

Also, said control member may be associated with a sensor such as a temperature sensitive device, enabling the display of changing colours according with a changing parameter such as the temperature. Advantageously, the temperature sensitive device may be arranged so as to make a display change colour according with a changing parameter.

Also, a device for controlling an additional parameter may be arranged in relation to the control member. Such devices may be for example buttons or knobs, which may be used for controlling additional parameters such as the direction of the air flow.

Additional features and advantages of the invention will appear more clearly from the following detailed description of some preferred embodiments of the invention, which is given by way of non-limiting example only and with reference to the accompanying drawings.

### Brief description of the accompanying drawings

Fig. 1 is a perspective view of a control unit according to a first embodiment of the invention, when in a first control position.
Fig. 1b is a perspective view of the control unit in Fig. 1 when in a second control position.
Fig. 2a is a top plan view of the control unit of Fig. 1
Fig. 2b is a top plan view of the control unit of Fig. 2
Fig. 3a is a side view of the control unit of Fig. 1
Fig. 3b is a side view of the control unit of Fig. 2
Fig. 3c is a side view of the same control unit as in Fig. 1, when in a minimum flow position.
Fig. 3d is a side view of the same control unit as in Fig. 1, when in an automatic flow position.
Fig. 4 is a perspective view of a second embodiment of a control unit according to the invention.

### Detailed description of preferred embodiments of the invention

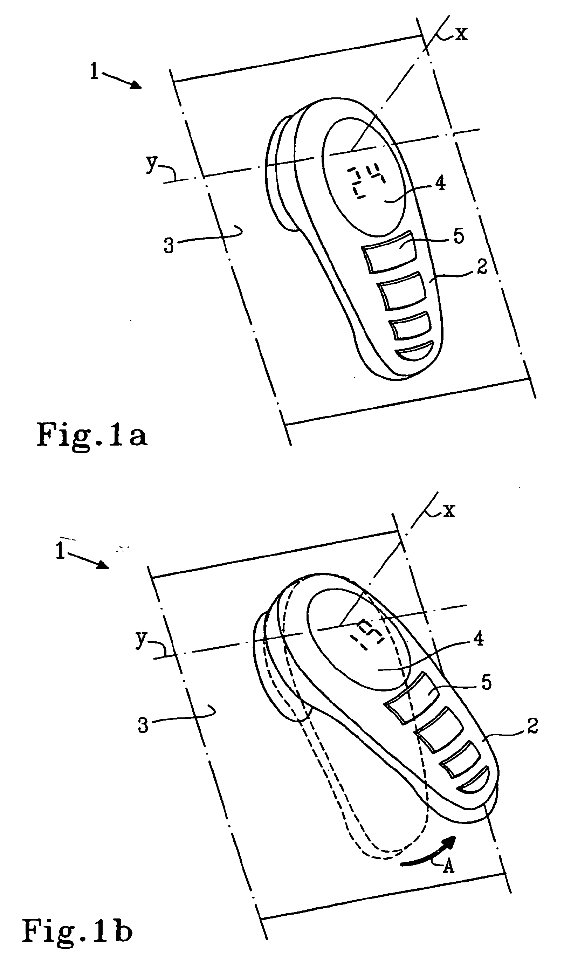

Fig. 1 depicts a control unit 1 comprising a control member 2. The control unit is suitable for controlling the climate inside a vehicle, and is depicted as attached in connection with a support 3, in this case a dashboard, of a motor vehicle. The control member 2 is rotationally adjustable in relation to a first geometrical axis X and in relation to a second geometrical axis Y. In this embodiment, the first geometrical axis X extends from the support plane, forming a normal to said plane. The second geometrical axis Y is orthogonal with the first axis and is, in this case, parallell with the support plane and extends horizontally as seen from a driver's position.

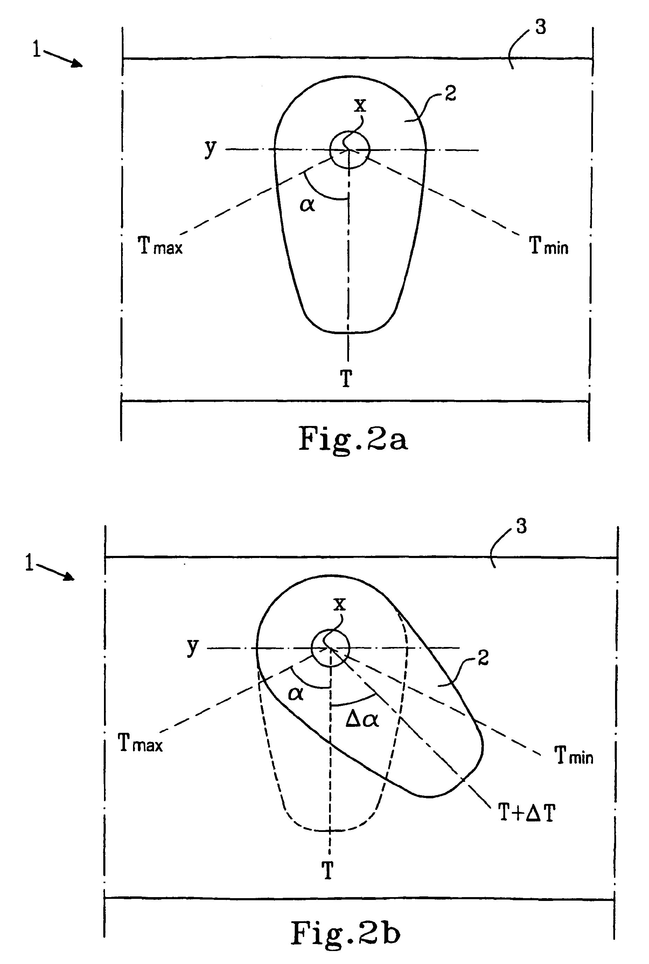

As illustrated in Figs 2a-2b, the control member 2 is rotationally adjustable about the first axis X-X between a plurality of first rotational coordinates. Each first coordinate (α) corresponds to a unique value of a first control parameter T on a scale from a minimum value Tmin to a maximum value Tmax. In this embodiment, the first coordinates correspond to temperature values on a temperature scale for setting the temperature inside the vehicle. Advantageously, the minimum and maximum values may correspond to extreme rotational positions of the control member 2, so that it is not possible to rotate the control member 2 beyond these positions.

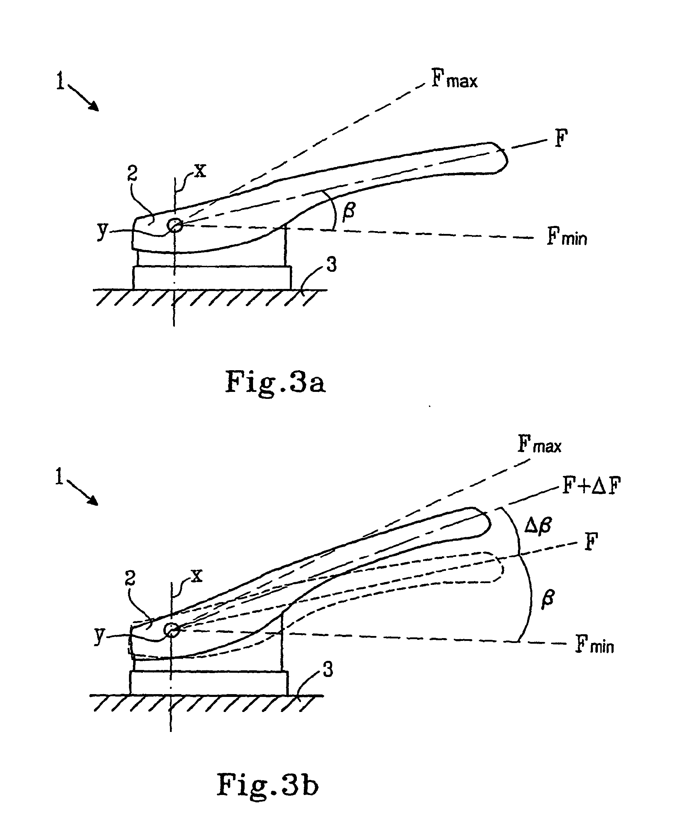

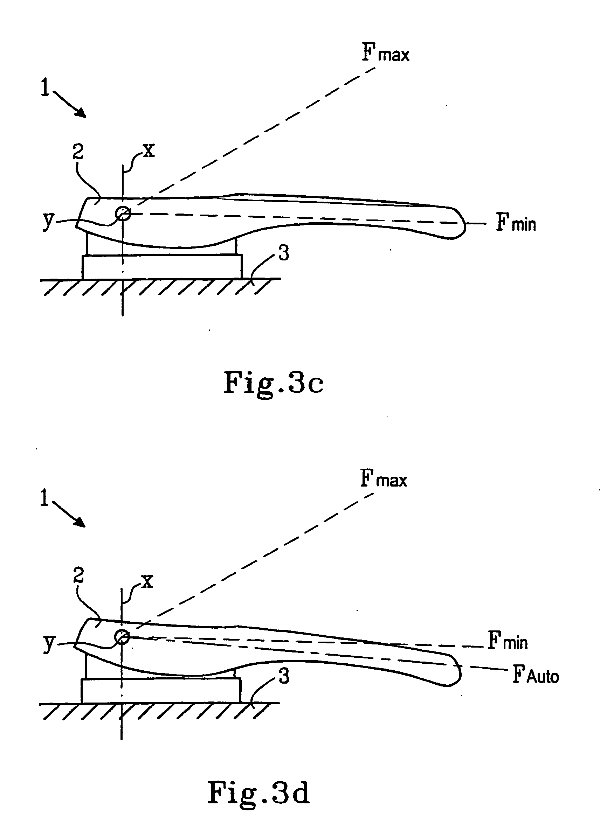

As is apparent from Figs 3a-3b, the control member 2 is also rotationally adjustable about the second axis Y between a plurality of second coordinates. Each second coordinate (β) corresponds to a unique value of a second control parameter F on a scale from a minimum value Fmin to a maximum value Fmax. In this embodiment, the second coordinates correspond to air-conditioning flow values for setting the air flow inside the vehicle. In this embodiment, the control member 2 is adjustable to a position beyond the minimum position Fmin seen in Fig 3c, to a position beyond the scale, this position corresponding to a position for automatic control of the air-conditioning flow as seen in Fig 3d. Preferably, a resistance device may be arranged at the extreme position of the scale, so that a user will feel when the scale ends, and need to increase the force on the control member 2 for adjusting it beyond the extreme position, into the automatic position. The adjustment of the control member 2 into the automatic position may also be accompanied by audible information of some type, such as a clicking noise or a beeping signal. The tactile information given by the resistance at the end of the scale, and possible additional audible information, enables the user to adjust the control member from or to the automatic position without having to look at the device. When the control device 2 is in the automatic position in relation to the second axis Y, it is still adjustable in relation to the first axis X, so that the first parameter, in this case the temperature, may be adjusted although the second parameter, in this case the air flow, is set for automatic adjustment.

In the embodiment of the invention depicted in Figs 1-3, the first and second pluralities of coordinates follow continually along the first and the second axis, respectively. Thus, stepless adjustment of the first and the second parameter is possible.

The control member 2 is independently adjustable in relation to each of the first and the second axis X, Y. Accordingly, adjustment of the parameter associated with the first axis, and adjustment of the parameter associated with the second axis may be made at the same time, and independent of each other. The control member 2 may be adjusted from any combination of the two parameters T, F to any other combination of the two parameters T+ΔT, F+ΔF by one single, unidirectional movement of the control member in relation to the two axis X, Y. For illustration see Fig 1b, where adjustment from a first position α, β (dotted line) to a second position α+Δα, β+Δβ has been accomplished by an adjustment in the direction of the arrow A.

In the embodiment of the control device illustrated in Figs 1-3, the intuitive quality of the device is further enhanced by the temperature scale being set so that, as seen from a driver's position, the minimum temperature position is situated to the right on the support, and the maximum temperature is situated to the left, whereas the minimum air-conditioning flow position is situated in a downward direction and the maximum air-condition flow position is situated in an upward direction. For example: for adjusting the temperature and air-flow so as to be cooler and stronger, the control device 2 is adjusted in an upward-right direction. This set up corresponds to the function of a regular water tap, which is why it is particularly intuitive and easy to learn for a user.

The embodiment of the control device illustrated in Figs 1-3 is provided with a display device 4 (only depicted in Figs 1a-1b) for presenting values of the first and/or second parameter. In this case, the display device 4 presents the temperature value set. The display device may, as illustrated, present the temperature as a digital number, but other options are of course possible. The display device may advantageously be associated with a temperature-sensitive device, enabling the display to change colour depending on the surrounding temperature. For example, the display may have a blue colour for cooler temperatures, and a red colour for warmer temperatures. The display device may advantageously be placed in a fixed relationship to the support, i.e. so as not to rotate with the rotation of the control member 2. Thus, the information displayed will be easily readable regardless of the position of the control member 2.

Also, the embodiment of the control device illustrated in Figs 1-3 is provided with a buttons 5 (only depicted in Figs 1a-1b) for selecting the direction of the air flow. For example, the uppermost button may represent the air flow being directed towards the head of a driver/passenger, the lowest button may represent the air flow being directed towards the feet of the driver, and the buttons in-between may correspond to intermediate directions. Instead of the buttons 5, other devices for controlling an additional parameter such as the direction of the air flow may be arranged. For example, a knob may be arranged so as to be movable along a separate scale along the length of the lever, where the different positions on the scale correspond to different directions of the air flow. Alternatively, a ring-shaped member may be arranged surrounding a part of the lever, wherein the different rotational positions of the member around the lever may correspond to different directions of the air flow.

In the embodiment of the invention depicted in Figs 1-3, the control member 2 is in the shape of a lever. Due to the fact that the settings of the parameters are made by rotational adjustments only, one end of the lever may be rotationally connected to the support, without possibility for displacements. The other end of the lever is shaped in a manner so as to be easy to grip and manipulate.

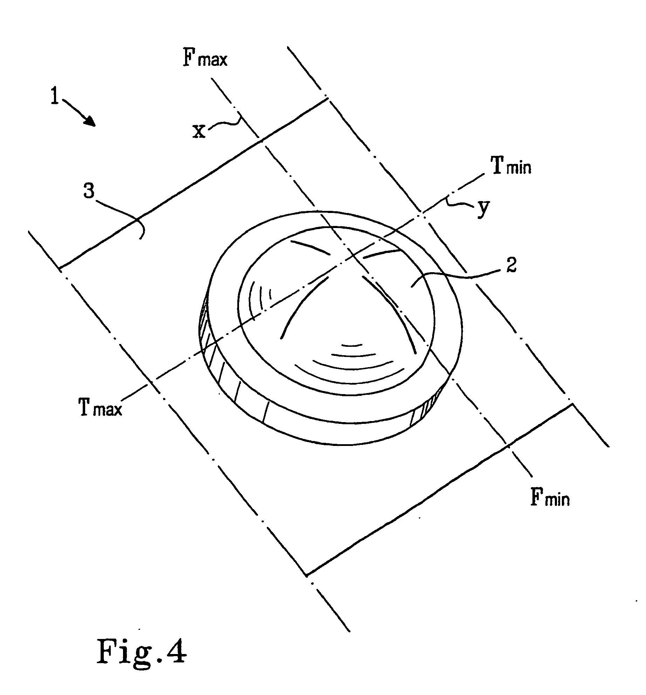

In Fig. 4 a second embodiment of a control unit according to the invention is depicted. In this embodiment, the control member 2 has the shape of a ball that may be rotated in a socket 5 arranged in the support. In this case, both the first and the second axis X, Y are arranged to be essentially parallel to the support section. It would however also be possible to have one of the axes extend out from the support plane. The axes X, Y are associated with parameter scales as described in relation to the first embodiment.

Although the described embodiments are of the type where the control member is rotationally adjustable around each of the first and second axes, the invention is not limited thereto. For example, an embodiment in which the first and second axes are associated with directions on a touch display, on which a cursor is movable in relation to the axes could be arranged according to the invention. Further, although described in relation to temperature and to air-conditioning flow, the control unit according to the invention could be used for controlling other parameters. In relation to Figs 1-3 an automatic position in relation to the second axis has been described. Naturally, such an automatic position could instead be associated with the first axis, or with both axes. Also, the automatic position could be controlled by for example a separate button or knob being arranged on the control member. A parameter sensitive device could be arranged without connection to an advanced display as described above, but instead in relation to for example a simple lamp that changes colour in relation to changing temperature. Further, the person skilled in the art can envisage other modifications without departing from the scope of the invention.

## Claims

1. Vehicle climate control unit (1), comprising a control member (2), being adjustable between a plurality of first coordinates (α) in relation to a first geometrical axis (X), and being adjustable between a plurality of second coordinates (β) in relation to a second geometrical axis (Y), wherein each first coordinate (α) corresponds to a unique value of a first control parameter (T) on a scale from a minimum (Tmin) to a maximum value (Tmax) and each second coordinate (β) corresponds to a unique value of a second control parameter (F) on a scale from a minimum (Fmin) to a maximum value (Fmax), said first and second parameters controlling different properties of a vehicle climate control system to which the control unit is connected,
and wherein the control member (2) is independently adjustable in relation to each of the first and second axes (X,Y), such that changing from any combination of the two parameters (T, F) to any other combination of the two parameters (T+ΔT, F+ΔF) is achievable by adjustment of the control member (2) from one position (α; β) to another position (α+Δα; β+Δβ) by one single, unidirectional movement of the control member (2) in relation to the two axes (X,Y)
**characterised in that**
said first and second pluralities of coordinates (α, β) follow continually about each axis, enabling stepless adjustment of the first and second parameters (T, F).

2. Control unit according to claim 1, wherein the control member (2) is rotationally adjustable about each of the first and second axes (X, Y), between a plurality of first rotational coordinates (α) and second rotational coordinates (β), respectively.

3. Control unit according to claim 1 or 2, wherein said first axis (X) is orthogonal with said second axis (Y).

4. Control unit according to any of the preceding claims, said unit (1) being adapted to be arranged at a support (3), preferably a dashboard, of a vehicle, wherein one of said first and second axes (X) is directed so as to extend from a plane corresponding to the support (3), preferably so as to generally coincide with a normal to said plane.

5. Control unit according to any of the preceding claims, wherein said first control parameter (T) is the temperature inside the vehicle and the first axis (X) corresponds to a temperature scale, and said second control parameter (F) is the air-conditioning flow inside the vehicle and the second axis (Y) corresponds to an air-conditioning flow scale.

6. Control unit according to claim 5 when dependent on claim 4, wherein said first axis (X) being associated with the temperature scale extends from a support plane, and said second axis (Y) being associated with the air-conditioning flow is essentially parallel with the support plane.

7. Control unit according to claim 6, wherein, as seen from a driver's position, the minimum temperature position (Tmin) is situated to the right in relation to the support and the maximum temperature position (Tmax) is situated to the left, and the minimum air-conditioning flow position (Fmin) is situated in a downward direction and the maximum air-conditioning flow position (Fmax) is situated in an upward direction.

8. Control unit according to any of the preceding claims, wherein the control member (2) is adjustable to a position beyond at least one of said scales, corresponding to an automatic position (Fauto).

9. Control unit according to any of the claims 5 to 7 and 8, wherein the control member (2) is adjustable to a position beyond the air-conditioning scale corresponding to an automatic air-conditioning flow position, in which the temperature may still be adjusted by rotation about the first axis.

10. Control unit according to any of the preceding claims, wherein said control member (2) is in the shape of a lever.

11. Control unit according to any of the preceding claims, wherein a display device (4) for presenting values of the first and/or second parameter is arranged on said control member (2).

12. Control unit according to claim 11 when dependent on any of claims 4, 6 or 7, wherein said display device (4) is arranged so as to be fixed in relation to the support (3).

13. Control unit according to any of the preceding claims, wherein one of said parameters is the temperature, and said control member (2) is assodated with a temperature sensitive device which is capable of displaying changing colour in accordance with changing temperature.

## Patentansprüche

1. Fahrzeugklimasteuereinheit (1), die ein Steuerorgan (2) umfasst, das zwischen mehreren ersten Koordinaten (α) in Bezug auf eine erste geometrische Achse (X) einstellbar ist und zwischen mehreren zweiten Koordinaten (β) in Bezug auf eine zweite geometrische Achse (Y) einstellbar ist, wobei jede erste Koordinate (α) einem eindeutigen Wert eines ersten Steuerparameters (T) auf einer Skala von einem Minimalwert (Tmin) zu einem Maximalwert (Tmax) entspricht und jede zweite Koordinate (β) einem eindeutigen Wert eines zweiten Steuerparameters (F) auf einer Skala von einem Minimalwert (Fmin) zu einem Maximalwert (Fmax) entspricht, wobei der erste und der zweite Parameter unterschiedliche Eigenschaften eines Fahrzeugklimasteuersystems, mit dem die Steuereinheit verbunden ist, steuern,
und wobei das Steuerelement (2) in Bezug auf die erste und die zweite Achse (X, Y) unabhängig einstellbar ist, so dass eine Änderung von irgendeiner Kombination der zwei Parameter (T, F) zu irgendeiner anderen Kombination der zwei Parameter (T + ΔT, F + ΔF) durch Einstellen des Steuerorgans (2) aus einer Position (α; β) zu einer weiteren Position (α + Δα; β + Δβ) durch eine einzige Bewegung in einer einzigen Richtung des Steuerorgans (2) in Bezug auf die zwei Achsen (X, Y) erzielbar ist,
**dadurch gekennzeichnet, dass**
die erste und die zweite Mehrzahl von Koordinaten (α, β) kontinuierlich um jede Achse aufeinander folgen, wodurch eine stufenlose Einstellung des ersten und des zweiten Parameters (T, F) möglich ist.

2. Steuereinheit nach Anspruch 1, bei der das Steuerorgan (2) rotatorisch um jede der ersten und der zweiten Achse (X, Y) zwischen mehreren ersten Drehkoordinaten (α) bzw. zweiten Drehkoordinaten (β) einstellbar ist.

3. Steuereinheit nach Anspruch 1 oder 2, bei der die erste Achse (X) zu der zweiten Achse (Y) senkrecht ist.

4. Steuereinheit nach einem der vorhergehenden Ansprüche, wobei die Einheit (1) so beschaffen ist, dass sie auf einem Träger (3), vorzugsweise auf einem Armaturenbrett eines Fahrzeugs, angeordnet sein kann, wobei eine (X) der ersten und der zweiten Achse so orientiert ist, dass sie sich von einer dem Träger (3) entsprechenden Ebene erstreckt, vorzugsweise so, dass sie im Allgemeinen mit einer Normalen der Ebene zusammenfällt.

5. Steuereinheit nach einem der vorhergehenden Ansprüche, wobei der erste Steuerparameter (T) die Temperatur in dem Fahrzeug ist und die erste Achse (X) einer Temperaturskala entspricht und der zweite Steuerparameter (F) die Klimatisierungsströmung in dem Fahrzeug ist und die zweite Achse (Y) einer Klimatisierungsströmungsskala entspricht.

6. Steuereinheit nach Anspruch 5, wenn abhängig von Anspruch 4, bei der sich die erste Achse (X), die der Temperaturskala zugeordnet ist, von einer Trägerebene erstreckt und die zweite Achse (Y), die der Klimatisierungsströmung zugeordnet ist, zu der Trägerebene im Wesentlichen parallel ist.

7. Steuereinheit nach Anspruch 6, bei der bei Betrachtung aus einer Fahrerposition die Position (Tmin) für minimale Temperatur sich rechts in Bezug auf den Träger befindet und die Position (Tmax) für maximale Temperatur sich links befindet und die Position (Fmin) für minimale Klimatisierungsströmung sich in einer Abwärtsrichtung befindet und die Position (Fmax) für maximale Klimatisierungsströmung sich in einer Aufwärtsrichtung befindet.

8. Steuereinheit nach einem der vorhergehenden Ansprüche, bei der das Steuerorgan (2) in eine Position oberhalb wenigstens einer der Skalen, die einer Automatikposition (Fauto) entspricht, einstellbar ist.

9. Steuereinheit nach einem der Ansprüche 5 bis 7 und 8, bei der das Steuerorgan (2) in eine Position oberhalb der Klimatisierungsskala, die einer Position für automatische Klimatisierungsströmung entspricht, einstellbar ist, in der die Temperatur durch Drehen um die erste Achse noch immer eingestellt werden kann.

10. Steuereinheit nach einem der vorhergehenden Ansprüche, bei der das Steuerorgan (2) die Form eines Hebels hat.

11. Steuereinheit nach einem der vorhergehenden Ansprüche, bei der eine Anzeigevorrichtung (4) zum Darstellen von Werten des ersten und/oder des zweiten Parameters auf dem Steuerorgan (2) angeordnet ist.

12. Steuereinheit nach Anspruch 11, wenn abhängig von einem der Ansprüche 4, 6 oder 7, bei der die Anzeigevorrichtung (4) so angeordnet ist, dass sie in Bezug auf den Träger (3) befestigt ist.

13. Steuereinheit nach einem der vorhergehenden Ansprüche, bei der einer der Parameter die Temperatur ist und das Steuerorgan (2) einer temperaturempfindlichen Vorrichtung zugeordnet ist, die eine Farbe anzeigen kann, die sich entsprechend einer sich ändernden Temperatur ändert.

## Revendications

1. Unité de commande de climatisation pour véhicule (1) comprenant un élément de commande (2), réglable entre une pluralité de premières coordonnées (a) par rapport à un premier axe géométrique (X), et réglable entre une pluralité de secondes coordonnées (β) par rapport à un second axe géométrique (Y), dans laquelle chaque première coordonnée (a) correspond à une valeur unique d'un premier paramètre de commande (T) sur une échelle allant d'une valeur minimum (Tmin) à une valeur maximum (Tmax) et chaque seconde coordonnée (β) correspond à une valeur unique d'un second paramètre de commande (F) sur une échelle allant d'une valeur minimum (Fmin) à une valeur maximum (Fmax), lesdits premier et second paramètres commandant différentes propriétés d'un système de commande de climatisation pour véhicule auquel l'unité de commande est connectée,
et dans laquelle l'élément de commande (2) est réglable indépendamment par rapport à chacun des premier et second axes (X, Y), de sorte que la modification de n'importe quelle combinaison des deux paramètres (T, F) pour n'importe quelle autre combinaison de deux paramètres (T+ΔT, F+ΔF) est réalisable en réglant l'élément de commande (2) pour passer d'une position (a;β) à une autre position (a+Δa; β+Δβ) en un seul mouvement unidirectionnel de l'élément de commande (2) par rapport aux deux axes (X, Y),
**caractérisée par le fait que**
lesdites première et seconde pluralités de coordonnées (a,β) suivent de façon continue chaque axe, permettant un réglage sans étape du premier et du second paramètre (T, F).

2. Unité de commande selon la revendication 1, dans laquelle l'élément de commande (2) est réglable du point de vue rotationnel autour de chacun des premier et second axes (X, Y) entre une pluralité de premières coordonnées rotationnelles (a) et de secondes coordonnées rotationnelles (β), respectivement.

3. Unité de commande selon la revendication 1 ou 2, dans laquelle ledit premier axe (X) est orthogonal par rapport au dit second axe (Y).

4. Unité de commande selon l'une quelconque des revendications précédentes, ladite unité (1) étant adaptée pour être disposée sur un support (3), de préférence un tableau de bord, d'un véhicule, dans laquelle l'un desdits premier et second axes (X) est orienté de façon à se prolonger depuis un plan correspondant au support (3), de préférence de façon à coïncider généralement avec un normal par rapport au dit plan.

5. Unité de commande selon l'une quelconque des revendications précédentes, dans laquelle ledit premier paramètre de commande (T) est la température à l'intérieur du véhicule et le premier axe (X) correspond à une échelle de température, et ledit second paramètre (F) est le débit d'air conditionné à l'intérieur du véhicule et le second axe (Y) correspond à une échelle de débit d'air conditionné.

6. Unité de commande selon la revendication 5 lorsqu'elle dépend de la revendication 4, dans laquelle ledit premier axe (X) étant associé à l'échelle de température se prolonge depuis un plan de support, et ledit second axe (Y) étant associé au débit d'air conditionné est essentiellement parallèle au plan de support.

7. Unité de commande selon la revendication 6, dans laquelle, vue depuis la position de conduite, la position de température minimum (Tmin) est située sur la droite par rapport au support et la position de température maximum (Tmax) est située sur la gauche, et la position de débit d'air conditionné minimum (Fmin) est située vers le bas et la position de débit d'air conditionné maximum (Fmax) est située vers le haut.

8. Unité de commande selon l'une quelconque des revendications précédentes, dans laquelle l'élément de commande (2) est réglable sur une position située au-delà d'au moins une desdites échelles, correspondant à une position automatique (Fauto).

9. Unité de commande selon l'une quelconque des revendications 5 à 7 et 8, dans laquelle l'élément de commande (2) est réglable sur une position située au-delà de l'échelle de conditionnement d'air correspondant à une position de débit d'air conditionné automatique, dans laquelle la température peut encore être réglée par rotation autour du premier axe.

10. Unité de commande selon l'une quelconque des revendications précédentes, dans laquelle ledit élément de commande (2) a la forme d'un levier.

11. Unité de commande selon l'une quelconque des revendications précédentes, dans laquelle un dispositif d'affichage (4) présentant les valeurs du premier et/ou du second paramètre est disposé sur ledit élément de commande (2).

12. Unité de commande selon la revendication 11, lorsqu'elle dépend de l'une des revendications 4, 6 ou 7, dans laquelle ledit élément d'affichage (4) est disposé de façon à être fixé par rapport au support (3).

13. Unité de commande selon l'une quelconque des revendications précédentes, dans laquelle l'un desdits paramètres est la température, et ledit élément de commande (2) est associé à un dispositif thermosensible capable d'afficher une couleur changeant en fonction des modifications de la température.
